# EUROPÄISCHE PATENTSCHRIFT

(11) **EP 3 423 736 B1**
(45) Veröffentlichungstag und Bekanntmachung des Hinweises auf die Patenterteilung: **22.07.2020**
(21) Anmeldenummer: 17706987.9
(22) Anmeldetag: 23.02.2017
(51) Int. Cl.: F16H 48/38, F16H 48/40

(54) **DIFFERENTIALGETRIEBE FÜR EIN KRAFTFAHRZEUG**
DIFFERENTIAL GEARING FOR A MOTOR VEHICLE
TRANSMISSION DIFFÉRENTIELLE DE VÉHICULE AUTOMOBILE

(30) Priorität: 03.03.2016 DE 102016203551
(43) Veröffentlichungstag der Anmeldung: 09.01.2019
(73) Patentinhaber: Audi AG, 85045 Ingolstadt (DE)
(72) Erfinder: KOCKISCH, René, 09212 Limbach-Oberfrohna (DE); KELLER, Nico, 08344 Grünhain-Beierfeld (DE); PINSCHMIDT, Udo, 85080 Gaimersheim (DE); HUMMEL, Steffen, 85055 Ingolstadt (DE)
(86) Internationale Anmeldenummer: PCT/EP2017/054123
(87) Internationale Veröffentlichungsnummer: WO 2017/148783

(56) Entgegenhaltungen:
- WO-A2-2005/098278
- DE-A1-102008 015 400
- DE-A1-102014 118 026
- DE-T5-112013 004 889

## Beschreibung

Die Erfindung betrifft ein Differentialgetriebe, insbesondere ein Achsgetriebe, für ein Kraftfahrzeug, gemäß dem Oberbegriff von Patentanspruch 1.

Ein solches beispielsweise als Achsgetriebe ausgebildetes Differentialgetriebe für ein Kraftfahrzeug ist beispielsweise bereits der DE 10 2008 037 885 A1 als bekannt zu entnehmen. Das Differentialgetriebe weist ein Tellerrad auf, welches von einem Ritzel des Kraftfahrzeugs antreibbar ist. Ferner weist das Tellerrad eine Außenverzahnung auf. Außerdem umfasst das Differentialgetriebe eine von dem Tellerrad antreibbare Differentialeinheit zum Drehzahlausgleich zwischen über die Differentialeinheit von dem Ritzel antreibbaren Rädern des Kraftfahrzeugs. Bei der DE 10 2008 037 885 A1 ist bezogen auf einen Drehmomentfluss von dem Tellerrad zur Differentialeinheit zwischen dem Tellerrad und der Differentialeinheit eine Reibungskupplung angeordnet, mittels welcher das Tellerrad mit der Differentialeinheit koppelbar beziehungsweise von der Differentialeinheit entkoppelbar ist.

Ferner offenbart die DE 10 2014 118 026 A1 ein Antriebsmodul, mit einem Motor und mit einer Getriebe- und Differentialanordnung. Die Getriebe- und Differentialanordnung umfasst eine Differentialeinheit und ein der Differentialeinheit vorgeschaltes Getriebe, über welches die Differentialeinheit von dem Motor antreibbar ist.

Darüber hinaus offenbart die DE 10 2011 100 816 A1 eine Antriebsanordnung für mittels einer Elektromaschine und über ein Differential angetriebene Räder eines Kraftfahrzeugs, wobei die einen Rotor und einen Stator aufweisende Elektromaschine ein Eingangselement des Differentials antreibt, dessen Ausgangselemente über Abtriebswellen auf die Räder des Kraftfahrzeugs abtreiben. Dabei ist es vorgesehen, dass der ringförmige Rotor der Elektromaschine über einen Übersetzungstrieb auf das Eingangselement des Differentials abtreibt und dass der Übersetzungstrieb und das Differential in den Rotor integriert sind.

Außerdem offenbart die DE 197 21 091 A1 eine Zweistellungs-Antriebstrennvorrichtung für ein Differential bei einem Kraftfahrzeug.

Aus der WO 2005/098278 A2 ist ein Verteilergetriebe für ein Kraftfahrzeug mit einer ersten und einer zweiten angetriebenen Achse bekannt. Der DE 10 2008 015 400 A1 ist eine Getriebeanordnung zur gesteuerten Verteilung eines Antriebsmoments auf zwei Räder einer ersten angetriebenen Achse als bekannt zu entnehmen. Außerdem offenbart die DE 10 2014 118 026 A1 ein Antriebsmodul. Darüber hinaus ist aus der DE 11 2013 004 889 T5 ein Antriebsaufbau für ein Kraftfahrzeug mit Allradantrieb bekannt.

Aufgabe der vorliegenden Erfindung ist es, ein Differentialgetriebe der eingangs genannten Art derart weiterzuentwickeln, dass sich auf besonders einfache und somit kostengünstige Weise ein effizienter Betrieb des Kraftfahrzeugs realisieren lässt.

Diese Aufgabe wird erfindungsgemäß durch ein Differentialgetriebe mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft ein Differentialgetriebe für ein Kraftfahrzeug. Insbesondere ist das Differentialgetriebe als Achsgetriebe. Das Differentialgetriebe umfasst ein Tellerrad, welches eine Außenverzahnung aufweist und von einem Ritzel des Kraftfahrzeugs antreibbar ist. Beispielsweise umfasst das Kraftfahrzeug einen Antriebsmotor, mittels welchem das Ritzel antreibbar ist. Somit ist das Tellerrad über das Ritzel von dem Antriebsmotor antreibbar. Beispielsweise steht das Tellerrad, insbesondere dessen Außenverzahnung, mit dem Ritzel in Eingriff.

Das Differentialgetriebe umfasst ferner eine von dem Tellerrad antreibbare Differentialeinheit zum Drehzahlausgleich zwischen Rädern des Kraftfahrzeugs , die über die Differentialeinheit von dem Ritzel und somit von dem Antriebsmotor antreibbar sind.

Um nun auf besonders einfache und somit kostengünstige Weise einen besonders effizienten und somit energieverbrauchsarmen Betrieb des Kraftfahrzeugs zu realisieren, ist es erfindungsgemäß vorgesehen, dass die Differentialeinheit ein von dem Tellerrad antreibbares und eine Innenverzahnung aufweisendes Hohlrad aufweist, über welches die Räder antreibbar sind. Ferner ist bezogen auf einen Drehmomentfluss von dem Tellerrad zu dem Hohlrad zwischen dem Tellerrad und dem Hohlrad eine Koppeleinrichtung angeordnet, welche zwischen wenigstens einer Koppelstellung und wenigstens einer Entkoppelstellung verstellbar, insbesondere relativ zu dem Hohlrad bewegbar, ist. In der Koppelstellung der Koppeleinrichtung ist das Hohlrad über die Koppeleinrichtung mit dem Tellerrad gekoppelt. In der Entkoppelstellung der Koppeleinrichtung ist das Hohlrad nicht über die Koppeleinrichtung mit dem Tellerrad gekoppelt ist, sodass beispielsweise in der Entkoppelstellung das Hohlrad relativ zu dem Tellerrad drehbar ist beziehungsweise sodass in der Entkoppelstellung keine Drehmomente von dem Tellerrad über die Koppeleinrichtung auf das Hohlrad übertragen werden können und umgekehrt.

In der Koppelstellung können Drehmomente von dem Tellerrad über die Koppeleinrichtung auf das Hohlrad übertragen werden, sodass das Hohlrad in der Koppelstellung der Koppeleinrichtung über diese von dem Tellerrad antreibbar ist und umgekehrt. Unter dem Hohlrad ist ein innenverzahntes Zahnrad zu verstehen, mit dessen Innenverzahnung wenigstens ein Planetenrad kämmt beziehungsweise in Eingriff steht.

Durch den Einsatz des Hohlrades und der Koppeleinrichtung können der Bauraumbedarf und das Gewicht der Differentialeinheit besonders gering gehalten werden, und die Differentialeinheit kann auf besonders einfache und somit kostengünstige Weise bedarfsgerecht von dem Tellerrad und somit von dem Antriebsmotor entkoppelt und gekoppelt werden. Zum Entkoppein der Differentialeinheit und somit der Räder von dem Tellerrad und somit von dem Antriebsmotor wird die Koppeleinrichtung in die Entkoppelstellung gestellt beziehungsweise bewegt. Um die Differentialeinheit und somit die Räder mit dem Tellerrad und somit dem Antriebsmotor zu koppeln, wird die Koppeleinrichtung in ihre Koppelstellung bewegt beziehungsweise gestellt.

Durch den Einsatz des Hohlrads und der Koppeleinrichtung ist es somit auf einfache, kosten-, gewichts- und bauraumgünstige Weise möglich, einen besonders großen Funktionsumfang des beispielsweise als Verteilergetriebe, insbesondere Achs-Verteilergetriebe, ausgebildeten Differentialgetriebes zu realisieren. Durch die Möglichkeit, die Differentialeinheit und somit die Räder von dem Tellerrad und somit von dem Antriebsmotor abzukoppeln - indem die Koppeleinrichtung in ihre Entkoppelstellung gestellt wird -, können je nach Fahrsituation unterschiedliche Betriebsmodi dargestellt werden. Beispielsweise ist es möglich, auf einfache Weise einen hybriden Antriebsstrang beziehungsweise einen hybriden Fahrmodus und/oder ein Torque Vectoring und/oder andere Betriebsmodi zu realisieren.

Ferner dient die Abkopplung beziehungsweise Entkopplung des Hohlrads von dem Tellerrad der Stilllegung zumindest eines Teils eines Antriebsstrangs des Kraftfahrzeugs, sodass das Kraftfahrzeug besonders energieverbrauchsarm angetrieben werden kann. Ist der Antriebsmotor beispielsweise als Verbrennungskraftmaschine ausgebildet, so können infolge der Abkopplung der Kraftstoffverbrauch und somit die CO₂-Emissionen besonders gering gehalten werden.

Des Weiteren ist die Differentialeinheit als Ravigneaux-Satz ausgebildet. Hierbei umfasst die Differentialeinheit das Hohlrad und einen mit dem Hohlrad kämmenden ersten Planetenradsatz. Der erste Planetenradsatz umfasst wenigstens ein erstes Planetenrad, welches mit dem Hohlrad kämmt beziehungsweise in Eingriff mit dem Hohlrad steht. Die Differentialeinheit umfasst ferner einen mit dem ersten Planetenradsatz kämmenden zweiten Planetenradsatz, welcher wenigstens ein zweites Planetenrad umfasst, das mit dem ersten Planetenrad in Eingriff steht. Ferner umfasst das Differentialgetriebe ein mit dem ersten Planetenradsatz kämmendes erstes Sonnenrad und ein mit dem zweiten Planetenradsatz kämmendes zweites Sonnenrad. Des Weiteren umfasst die Differentialeinheit einen Planetenträger, an welchem die Planetenradsätze, insbesondere gemeinsam, gelagert beziehungsweise gehalten sind.

Um das Differentialgetriebe besonders einfach und somit kostengünstig ausgestalten zu können, ist es bei einer vorteilhaften Ausführungsform der Erfindung vorgesehen, dass das Differentialgetriebe ein Gehäuse umfasst, welches einen Aufnahmeraum aufweist, in welchem die Differentialeinheit aufgenommen ist, wobei das Tellerrad auf einer dem Aufnahmeraum abgewandten Außenseite des Gehäuses angeordnet ist.

Um die Kosten und den Bauraumbedarf besonders gering zu halten, ist es bei einer weiteren Ausführungsform der Erfindung vorgesehen, dass das Hohlrad über das Gehäuse von dem Tellerrad antreibbar ist, wobei das Tellerrad drehfest mit dem Gehäuse verbunden und das Hohlrad separat von dem Gehäuse ausgebildet ist, und wobei das Hohlrad in der Koppelstellung über die Koppeleinrichtung mit dem Gehäuse gekoppelt und in der Entkoppelstellung von dem Gehäuse entkoppelt ist.

Das Tellerrad kann separat von dem Gehäuse ausgebildet und mit dem Gehäuse verbunden sein. Beispielsweise ist das Tellerrad mit dem Gehäuse stoffschlüssig verbunden, insbesondere verschweißt.

Um die Teileanzahl und somit die Kosten des Differentialgetriebes besonders gering zu halten, ist es bei einer weiteren Ausführungsform der Erfindung vorgesehen, dass das Tellerrad einstückig mit dem Gehäuse ausgebildet ist.

In weiterer Ausgestaltung der Erfindung ist das Hohlrad über das Gehäuse von dem Tellerrad antreibbar, wobei das Hohlrad drehfest mit dem Gehäuse verbunden und das Tellerrad separat von dem Gehäuse ausgebildet ist, und wobei das Tellerrad in der Koppelstellung über die Koppeleinrichtung mit dem Gehäuse gekoppelt und in der Entkoppelstellung von dem Gehäuse entkoppelt ist. Auch hierdurch können die Komplexität und somit die Kosten des Differentialgetriebes besonders gering gehalten werden.

Dabei kann vorgesehen sein, dass das Hohlrad separat von dem Gehäuse ausgebildet und, insbesondere irreversibel lösbar, mit dem Gehäuse verbunden ist. Beispielsweise ist das Hohlrad stoffschlüssig mit dem Gehäuse verbunden, insbesondere verschweißt.

Als besonders vorteilhaft hat es sich jedoch gezeigt, wenn das Hohlrad einstückig mit dem Gehäuse ausgebildet ist, sodass die Teileanzahl und somit die Kosten und das Gewicht des Differentialgetriebes besonders gering gehalten werden können.

Als besonders vorteilhaft hat es sich dabei gezeigt, wenn wenigstens ein erstes der Räder des Kraftfahrzeugs über den Planetenträger und wenigstens ein zweites der Räder über das zweite Sonnenrad antreibbar ist. Hierdurch kann der Drehzahlausgleich zwischen den Rädern auf besonders einfache und bauraumgünstige Weise realisiert werden.

Eine weitere Ausführungsform zeichnet sich dadurch aus, dass eine von dem Antriebsmotor des Kraftfahrzeugs unterschiedliche Antriebseinheit vorgesehen ist, mittels welcher das erste Sonnenrad antreibbar ist, um eine Drehmomentverteilung auf die Räder zu variieren beziehungsweise zu beeinflussen. Da das erste Rad über den Planetenträger und das zweite Rad über das zweite Sonnenrad antreibbar ist, kann die Drehmomentverteilung auf die Räder auf besonders einfache und kostengünstige Weise über das erste Sonnenrad beeinflusst werden. Hierzu wird das erste Sonnenrad mittels der Antriebseinheit entsprechend angetrieben. Unter der Drehmomentverteilung ist zu verstehen, dass die Räder über die Differentialeinheit mit jeweiligen Drehmomenten beaufschlagt werden, um dadurch die Räder anzutreiben. Mittels der Antriebseinheit lässt sich die Drehmomentverteilung besonders vorteilhaft und bedarfsgerecht durchführen, sodass Eingriffe in das Fahrverhalten realisierbar sind.

In weiterer Ausgestaltung der Erfindung ist das Tellerrad in der Koppelstellung der Koppeleinrichtung mittels der Koppeleinrichtung formschlüssig mit dem Tellerrad gekoppelt. Mit anderen Worten ist die Koppeleinrichtung dazu ausgebildet, in ihrer Koppelstellung das Tellerrad mit dem Hohlrad formschlüssig zu verbinden. Wieder mit anderen Worten ausgedrückt bewirkt die Koppeleinrichtung in ihrer Koppelstellung eine formschlüssige Kopplung des Tellerrads mit dem Hohlrad, sodass beispielsweise Drehmomente von dem Tellerrad auf das Hohlrad über die Koppeleinrichtung formschlüssig übertragen werden können. Dadurch kann ein besonders effizienter und somit energieverbrauchsarmer beziehungsweise kraftstoffverbrauchsarmer Betrieb realisiert werden.

Zur Realisierung eines besonders verschleißarmen Betriebs ist es bei einer weiteren Ausführungsform der Erfindung vorgesehen, dass das Differentialgetriebe eine Synchronisationseinrichtung zum Synchronisieren des Tellerrads mit dem Hohlrad bei Verstellen der Koppeleinrichtung aus der Entkoppelstellung in die Koppelstellung umfasst. Wie von einer Synchronisation eines Getriebes hinlänglich bekannt, bewirkt die Synchronisationseinrichtung einen Drehzahlangleich beziehungsweise Drehzahlausgleich zwischen dem Hohlrad und dem Tellerrad, wenn die Koppeleinrichtung aus der Entkoppelstellung in die Koppelstellung bewegt wird. Befindet sich die Koppeleinrichtung in ihrer Entkoppelstellung, so kann es zu Relativdrehungen zwischen dem Tellerrad und dem Hohlrad kommen. Wird die Koppeleinrichtung aus der Entkoppelstellung in die Koppelstellung bewegt, so bewirkt die Synchronisationseinrichtung ein der Drehzahl des Tellerrads an die Drehzahl des Hohlrads.

In der Koppelstellung sind das Tellerrad und das Hohlrad drehfest miteinander verbunden weisen demzufolge dieselbe Drehzahl aufweisen. Der Einsatz der Synchronisationseinrichtung ermöglicht dabei ein besonders komfortables und verschleißarmes Koppeln des Tellerrads mit dem Hohlrad, da die Koppeleinrichtung beispielsweise erst dann durchschaltet, dass zum formschlüssigen Koppeln des Tellerrads mit dem Hohlrad vollständig in die Koppelstellung bewegt werden kann, wenn der Drehzahlunterschied zwischen dem Hohlrad und dem Tellerrad mittels der Synchronisationseinrichtung hinreichend verringert oder aufgehoben ist.

Vorzugsweise ist die Synchronisationseinrichtung als Reibsynchronisation ausgebildet, sodass die Synchronisationseinrichtung beispielsweise Reibelemente, insbesondere Reibkegel, umfasst, welche beim Verstellen der Koppeleinrichtung aus der Entkoppelstellung in die Koppelstellung in Reibkontakt miteinander kommen. Infolge dieses Reibkontakts wird das Tellerrad mit dem Hohlrad synchronisiert, sodass ein etwaiger Drehzahlunterschied zwischen dem Tellerrad und dem Hohlrad verringert oder ausgeglichen beziehungsweise aufgehoben wird.

Als besonders vorteilhaft hat es sich gezeigt, wenn die Synchronisationseinrichtung als Sperrsynchronisation ausgebildet ist. Im Rahmen einer solchen Sperrsynchronisation ist es vorgesehen, dass das Tellerrad mit dem Hohlrad in der Koppelstellung formschlüssig gekoppelt ist. Ferner ist es im Rahmen der Sperrsynchronisation vorgesehen, dass es bei der Verstellung der Koppeleinrichtung aus der Entkoppelstellung in die Koppelstellung zunächst zu einer Reduzierung beziehungsweise Aufhebung eines etwaigen Drehzahlunterschieds zwischen dem Tellerrad und dem Hohlrad durch Reibschluss kommt, indem - wie beschrieben - die Reibelemente der Synchronisationseinrichtung in gegenseitigen Reibkontakt kommen.

Vorzugsweise erst, wenn mittels der Reibelemente ein etwaiger Drehzahlunterschied zwischen dem Tellerrad und dem Hohlrad zumindest reduziert oder aufgehoben ist, ist ein vollständiges Durchschalten der Koppeleinrichtung möglich, sodass, insbesondere erst, infolge des vollständigen Durchschaltens das Tellerrad mit dem Hohlrad über die Koppeleinrichtung formschlüssig gekoppelt ist. Somit kann die Koppeleinrichtung erst infolge des beschriebenen Aufhebens beziehungsweise Reduzierens des Drehzahlunterschieds zwischen dem Tellerrad und dem Hohlrad vollständig in die Koppelstellung bewegt werden. Bei einem übermäßigen Drehzahlunterschied zwischen dem Tellerrad und dem Hohlrad verhindert die Synchronisationseinrichtung ein vollständiges Durchschalten beziehungsweise das Bewegen oder Verstellen der Koppeleinrichtung aus der Entkoppelstellung in die Koppelstellung, wodurch ein übermäßiger Verschleiß des Differentialgetriebes vermieden werden kann.

Zur Erfindung gehört auch ein Kraftfahrzeug mit wenigstens einem erfindungsgemäßen Differentialgetriebe. Vorteile und vorteilhafte Ausgestaltungen des erfindungsgemäßen Differentialgetriebes sind als Vorteile und vorteilhafte Ausgestaltungen des erfindungsgemäßen Kraftfahrzeugs anzusehen und umgekehrt.

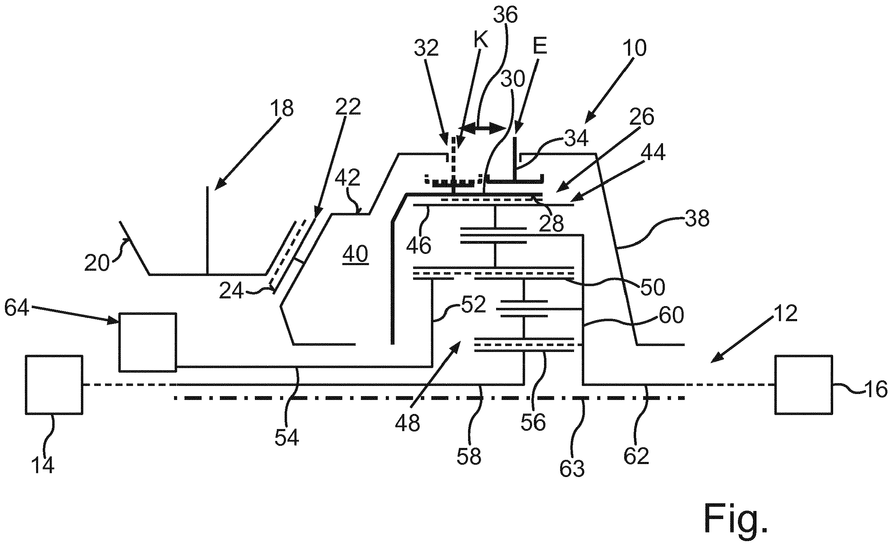

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Differentialgetriebes für ein Kraftfahrzeug, mit einem Tellerrad, mit einer ein Hohlrad aufweisenden Differentialeinheit und mit einer Koppeleinrichtung zum Koppeln und Entkoppeln des Tellerrads und des Hohlrads.

Die einzige Figur zeigt in einer schematischen Darstellung ein im Ganzen mit 10 bezeichnetes Differentialgetriebe für ein Kraftfahrzeug. Das Kraftfahrzeug umfasst wenigstens zwei in Fahrzeuglängsrichtung hintereinander angeordnete Achsen, von denen in der Figur eine schematisch dargestellt und mit 12 bezeichnet ist. Die in der Figur schematisch dargestellte Achse 12 ist beispielsweise eine Hinterachse, sodass die in der Figur nicht dargestellte andere Achse eine Vorderachse ist. Selbstverständlich können die vorigen und folgenden Ausführungen auch ohne weiteres auf eine eines Kraftfahrzeugs übertragen werden.

Das Kraftfahrzeug umfasst wenigstens einen Antriebsmotor, mittels welchem das Kraftfahrzeug antreibbar ist. Der Antriebsmotor weist eine Abtriebswelle auf, über welche der Antriebsmotor Drehmomente zum Antreiben des Kraftfahrzeugs bereitstellen kann. Mittels dieser Drehmomente sind beispielsweise Räder der in der Figur nicht gezeigten, anderen Achse antreibbar. Aus der Figur ist erkennbar, dass die Achse 12 weitere Räder 14 und 16 umfasst, welche - wie im Folgenden noch genauer erläutert wird - ebenfalls mittels des Antriebsmotors antreibbar sind. Wie im Folgenden ebenfalls noch genauer erläutert wird, ist das Kraftfahrzeug beispielsweise in einem ersten Betriebszustand betreibbar, in welchem der Antriebsmotor die Räder der in der Figur nicht gezeigten anderen Achse, nicht jedoch die Räder 14 und 16 antreibt. Somit ist ein Zweiradantrieb realisiert. Ferner ist das Kraftfahrzeug in einem zweiten Betriebszustand betreibbar, in welchem der Antriebsmotor sowohl die Räder der anderen Achse als auch die Räder 14 und 16 der Achse 12 antreibt. Dadurch ist ein Vierradantrieb realisiert.

Der Antriebsmotor und das Differentialgetriebe 10 sind Bestandteile eines Antriebsstrangs des Kraftfahrzeugs, wobei der Antriebsstrang ein von dem Antriebsmotor, insbesondere von der Abtriebswelle, antreibbares Ritzel 18 aufweist, welches eine Außenverzahnung 20 aufweist.

Das Differentialgetriebe 10 umfasst ein Tellerrad 22, welches eine Außenverzahnung 24 aufweist. Die Außenverzahnung 24 kämmt mit der Außenverzahnung 20, wobei das Tellerrad 22 über die Außenverzahnungen 20 und 24 in Eingriff mit dem Ritzel 18 steht. Somit ist das Tellerrad 22 von dem Ritzel 18 antreibbar. Wie im Folgenden noch erläutert wird, sind die Räder 14 und 16 über das Tellerrad 22 und das Ritzel 18 von dem Antriebsmotor, insbesondere von der Abtriebswelle, antreibbar.

Das Differentialgetriebe 10 umfasst eine Differentialeinheit 26 zum Drehzahlausgleich zwischen den über die Differentialeinheit 26 und das Tellerrad 22 von dem Ritzel 18 antreibbaren Räder 14 und 16. Dies bedeutet, dass die Räder 14 und 16 über die Differentialeinheit 26, das Tellerrad 22 und das Ritzel 18 von dem Antriebsmotor, insbesondere von der Abtriebswelle, antreibbar sind. Unter dem Drehzahlausgleich ist zu verstehen, dass die Differentialeinheit 26 beispielsweise bei einer Kurvenfahrt des Kraftfahrzeugs unterschiedliche Drehzahlen zwischen den Räder 14 und 16 zulässt. Ist beispielsweise bei einer Rechtskurve das Rad 14 das kurvenäußere Rad, sodass das Rad 16 das kurveninnere Rad ist, so lässt die Differentialeinheit 26 zu, dass sich die Räder 14 und 16 bei dieser Kurvenfahrt mit unterschiedlichen Drehzahlen drehen. In dem genannten Beispiel weist das kurvenäußere Rad 14 eine erste Drehzahl und das kurveninnere Rad 16 eine gegenüber der ersten Drehzahl geringere, zweite Drehzahl auf.

Um nun auf besonders einfache und somit kostengünstige Weise einen besonders effizienten Betrieb des Antriebsmotors und somit des Kraftfahrzeugs insgesamt zu realisieren, weißt die Differentialeinheit 26 ein von dem Tellerrad 22 antreibbares und eine Innenverzahnung 28 aufweisendes Hohlrad 30 auf, über welches die Räder 14 und 16 antreibbar sind. Dies bedeutet, dass die Räder 14 und 16 über das Hohlrad 30, das Tellerrad 22 und das Ritzel 18 von dem Antriebsmotor beziehungsweise von der Abtriebswelle antreibbar sind.

Ferner umfasst das Differentialgetriebe 10 eine im Ganzen mit 32 bezeichnete Koppeleinrichtung, welche bezogen auf einen Drehmomentfluss von dem Tellerrad 22 zu dem Hohlrad 30 zwischen dem Tellerrad 22 und dem Hohlrad 30 angeordnet ist. Die Koppeleinrichtung 32 ist dabei zwischen wenigstens einer in der Figur durch gestrichelte Linien veranschaulichten Koppelstellung K und wenigstens einer in der Figur durch durchgezogene Linien veranschaulichten Entkoppelstellung E verstellbar. Hierzu umfasst die Koppeleinrichtung 32 wenigstens ein Koppelelement 34, welches relativ zu dem Hohlrad 30 zwischen der Koppelstellung K und der Entkoppelstellung E, insbesondere translatorisch, bewegbar beziehungsweise verschiebbar ist.

In der Koppelstellung K ist das Hohlrad 30 über die Koppeleinrichtung 32, insbesondere über das Koppelelement 34, mit dem Tellerrad 22 gekoppelt, sodass in der Koppelstellung K das Hohlrad 30 und über dieses die Räder 14 und 16 über das Tellerrad 22 und das Ritzel 18 von dem Antriebsmotor angetrieben werden können. In der Entkoppelstellung E ist das Hohlrad 30 von dem Tellerrad 22 entkoppelt, da in der Entkoppelstellung E keine Drehmomente zwischen dem Tellerrad 22 und dem Hohlrad 30 über die Koppeleinrichtung 32 übertragen werden können. Somit sind die Differentialeinheit 26 und die Räder 14 und 16 in der Entkoppelstellung E von dem Tellerrad 22 und somit von dem Ritzel 18 und dem Antriebsmotor entkoppelt beziehungsweise abgekoppelt, sodass die Räder 14 und 16 nicht von dem Antriebsmotor angetrieben werden können. Die Verstellbarkeit beziehungsweise Bewegbarkeit des Koppelelements 34 relativ zu dem Hohlrad 30 ist in der Figur durch einen Doppelpfeil 36 veranschaulicht.

Durch den Einsatz der Koppeleinrichtung 32 und des Hohlrads 30 ist es möglich, den Bauraumbedarf des Differentialgetriebes 10 besonders gering zu halten und dabei einen besonders großen Funktionsumfang des Differentialgetriebes 10 zu realisieren, da mittels des Differentialgetriebes 10 der zuvor beschriebene Drehzahlausgleich zwischen den Rädern 14 und 16 besonders vorteilhaft und insbesondere bauraumgünstig gewährleistet werden kann. Ferner kann das Differentialgetriebe 10 beziehungsweise die Differentialeinheit 26 bedarfsgerecht und bauraumgünstig mit dem Tellerrad 22 und somit mit dem Antriebsmotor gekoppelt und von diesem entkoppelt werden, wodurch der Kraftstoffverbrauch des Antriebsmotors besonders gering gehalten werden kann.

Das Differentialgetriebe 10 umfasst ein Gehäuse 38, welches einen Aufnahmeraum 40 aufweist. Die Differentialeinheit 26 ist dabei in dem Aufnahmeraum 40 aufgenommen. Aus der Figur ist erkennbar, dass das Tellerrad 22 auf einer dem Aufnahmeraum 40 abgewandten Außenseite 42 des Gehäuses 38 angeordnet ist.

Die Koppeleinrichtung 32, insbesondere das Koppelelement 34, ist beispielsweise bewegbar an dem Gehäuse 38 gehalten, sodass das Hohlrad 30, insbesondere in der Koppelstellung K, über das Gehäuse 38 und das Tellerrad 22 von dem Ritzel 18 antreibbar ist. Bei dem in der Figur gezeigten Ausführungsbeispiel ist das Tellerrad 22 drehfest mit dem Gehäuse 38 verbunden. Dabei kann vorgesehen sein, dass das Tellerrad 22 als separat von dem Gehäuse 38 ausgebildetes und mit dem Gehäuse 38 zumindest drehfest verbundenes Bauteil ausgebildet ist. Beispielsweise ist das Tellerrad 22 stoffschlüssig mit dem Gehäuse 38 verbunden. Ferner ist es bei dem in der Figur veranschaulichten Ausführungsbeispiel vorgesehen, dass das Hohlrad 30 separat von dem Gehäuse 38 ausgebildet ist, sodass das Hohlrad 30 in der Entkoppelstellung E relativ zu dem Gehäuse 38 drehbar ist. In der Koppelstellung K ist das Hohlrad 30 mit dem Gehäuse 38 gekoppelt. In der Entkoppelstellung E jedoch ist das Hohlrad 30 von dem Gehäuse 38 entkoppelt. Bei dem in der Figur veranschaulichten Ausführungsbeispiel ist das Tellerrad 22 sowohl in der Koppelstellung K als auch in der Entkoppelstellung E drehfest mit dem Gehäuse 38 verbunden.

Alternativ dazu kann vorgesehen sein, dass das Hohlrad 30, insbesondere sowohl in der Entkoppelstellung E als auch in der Koppelstellung K, mit dem Gehäuse 38 zumindest drehfest verbunden und das Tellerrad 22 separat von dem Gehäuse 38 ausgebildet ist. Das Tellerrad 22 ist dabei in der Koppelstellung K mit dem Gehäuse 38 gekoppelt und in der Entkoppelstellung E von dem Gehäuse 38 entkoppelt. Somit ist das Tellerrad 22 in der Entkoppelstellung E relativ zu dem Gehäuse 38 drehbar, wobei das Hohlrad 30 sowohl in der Entkoppelstellung E als auch in der Koppelstellung K drehfest mit dem Gehäuse 38 verbunden ist.

Ferner ist es bei dem in der Figur veranschaulichten Ausführungsbeispiel vorgesehen, dass die Differentialeinheit 26 als Ravigneaux-Satz ausgebildet ist. Die Differentialeinheit 26 und somit der Ravigneaux-Satz umfassen das Hohlrad 30 und einen mit dem Hohlrad 30 kämmenden ersten Planetenradsatz 44, welcher wenigstens ein erstes mit dem Hohlrad 30 kämmendes Planetenrad 46 umfasst. Ferner umfasst die Differentialeinheit 26 einen mit dem ersten Planetenradsatz 44 kämmenden zweiten Planetenradsatz 48, welcher wenigstens ein mit dem ersten Planetenrad 46 kämmendes zweites Planetenrad 50 umfasst. Die Differentialeinheit 26 umfasst ferner ein mit dem ersten Planetenradsatz 44 und somit mit dem ersten Planetenrad 46 kämmendes erstes Sonnenrad 52, welches drehfest mit einer ersten Welle 54 verbunden ist.

Ferner umfasst die Differentialeinheit 26 ein mit dem zweiten Planetenradsatz 48 und somit mit dem zweiten Planetenrad 50 kämmendes zweites Sonnenrad 56, welches mit einer zweiten Welle 58 drehfest verbunden ist. Darüber hinaus umfasst die Differentialeinheit 26 einen Planetenträger 60, an welchem die Planetenradsätze 44 und 48 beziehungsweise die Planetenräder 46 und 50 drehbar gelagert beziehungsweise gehalten sind. Der Planetenträger 56 ist mit einer dritten Welle 62 drehfest verbunden.

Die Wellen 58 und 62 und somit das Sonnenrad 56 und der Planetenträger 60 sind um eine Drehachse 63 drehbar. Aus der Figur ist erkennbar, dass das Rad 16 über die Welle 62 und somit über den Planetenträger 60 von dem Ritzel 18 antreibbar ist, sodass die dritte Welle 62 eine erste Abtriebswelle des Differentialgetriebes 10 ist. Ferner ist das Rad 14 über die zweite Welle 58 und somit über das zweite Sonnenrad 56 antreibbar, sodass die zweite Welle 58 eine zweite Abtriebswelle des Differentialgetriebes 10 ist. Des Weiteren umfasst das Differentialgetriebe 10 eine in der Figur besonders schematisch dargestellte und von dem Antriebsmotor zum Antreiben des Kraftfahrzeugs unterschiedliche Antriebseinheit 64, mittels welcher die erste Welle 54 und somit das erste Sonnenrad 52 antreibbar sind. Dies bedeutet, dass von der Antriebseinheit 64 Drehmomente bereitgestellt werden können, welche über die erste Welle 54 auf das erste Sonnenrad 52 übertragen und über das erste Sonnenrad 52 in die Differentialeinheit 26 eingeleitet werden können. Hierzu umfasst die Antriebseinheit 64 beispielsweise einen von dem Antriebsmotor unterschiedlichen Motor, welcher beispielsweise als Elektromotor ausgebildet ist. Ferner kann die Antriebseinheit 64 ein Getriebe aufweisen, über welches die erste Welle 54 beziehungsweise das erste Sonnenrad 52 von dem Motor der Antriebseinheit 64 antreibbar ist. Das Getriebe ist beispielsweise als Planetengetriebe ausgebildet und dient beispielsweise dazu, von dem Motor der Antriebseinheit 64 bereitgestellte Drehmomente in demgegenüber höhere Drehmomente umzuwandeln. Dadurch können der Bauraumbedarf und somit das Gewicht des Motors der Antriebseinheit 64 gering gehalten werden.

Mittels der Antriebseinheit 64 ist es möglich, eine Drehmomentverteilung auf die Räder 14 und 16 zu beeinflussen beziehungsweise zu variieren. Mit anderen Worten ist es möglich, in eine mittels der Differentialeinheit 26 bewirkbaren Verteilung von Drehmomenten auf die Räder 14 und 16 einzugreifen, sodass beispielsweise das Rad 14 mittels eines ersten Drehmoments und gleichzeitig das Rad 16 mittels eines vom ersten Drehmoment unterschiedlichen, zweiten Drehmoments angetrieben werden kann. Hierdurch ist ein sogenanntes Torque Vectoring realisierbar, sodass beispielsweise die Gierrate des Kraftfahrzeugs bedarfsgerecht beeinflusst werden kann.

Der Ausgestaltung des Differentialgetriebes 10 lag der Wunsch zugrunde, eine neuartige Schaltstruktur zu schaffen, welche einen gegebenen Bauraum bestmöglich ausnutzt. Unterbaugruppen wie beispielsweise die als Schalteinheit ausgebildete Koppeleinrichtung 32 können jedoch auf Basis bereits bestehender Lösungen realisiert werden, sodass insgesamt der Bauraumbedarf und die Kosten des Differentialgetriebes 10 besonders gering gehalten werden können. Die Koppeleinrichtung 32 ist beispielsweise eine Entkopplungsstruktur oder eine Schalteinheit, deren Aktuierung, das heißt Betätigung, beispielsweise über einen Aktor erfolgt, welcher als mechanischer Aktor ausgebildet sein kann. Dieser Aktor ist in der Figur nicht dargestellt, wobei es beispielsweise vorgesehen ist, dass die Koppeleinrichtung 32, insbesondere das Koppelelement 34, mittels des Aktors zwischen der Koppelstellung K und der Entkoppelstellung E bewegbar ist.

Die Schalteinheit, das heißt die Koppeleinrichtung 32 selbst ist vorzugsweise formschlüssig ausgebildet beziehungsweise umgesetzt. Dies bedeutet beispielsweise, dass die Koppeleinrichtung 32 dazu ausgebildet ist, in der Koppelstellung K das Tellerrad 22 mit dem Hohlrad 30 über die Koppeleinrichtung 32 formschlüssig zu koppeln. Hierzu kann beispielsweise eine Verzahnungsverbindung vorgesehen sein. Beispielsweise weist das Koppelelement 34 eine erste Verzahnung und das Hohlrad 30 eine zweite Verzahnung auf, wobei die Verzahnungen in der Koppelstellung K in Eingriff stehen. In der Entkoppelstellung jedoch stehen die Verzahnungen außer Eingriff, sodass das Hohlrad 30 von dem Tellerrad 22 entkoppelt ist.

Als besonders vorteilhaft hat es sich gezeigt, wenn eine beispielsweise als Sperrsynchronisation ausgebildete Synchronisationseinrichtung zum Synchronisieren des Tellerrads 22 mit dem Hohlrad 30 vorgesehen ist. In der Entkoppelstellung E kommt es beispielsweise zu unterschiedlichen Drehzahlen zwischen dem Tellerrad 22 beziehungsweise dem Gehäuse 38 und dem Hohlrad 30. Beim Verstellen der Koppeleinrichtung 32 aus der Entkoppelstellung E in die Koppelstellung K wird dieser Drehzahlunterschied mittels der Synchronisationseinrichtung, insbesondere durch Reibschluss, reduziert und vorzugsweise aufgehoben, wenn beispielsweise ein mit dem Koppelelement 34 mitbewegbares erstes Reibelement mit wenigstens einem an dem Hohlrad 30 vorgesehenen zweiten Reibelement in Reibkontakt kommt. Infolge dieses Reibkontakts wird das Hohlrad 30 auf die gleiche Drehzahl wie das Tellerrad 22 beziehungsweise umgekehrt gebracht, wodurch der zuvor beschriebene Drehzahlunterschied aufgehoben wird. wenn der Drehzahlunterschied verringert oder aufgehoben ist, kann die Koppeleinrichtung 32 durchgeschaltet und in die Koppelstellung K gebracht werden, in welcher das Hohlrad 30 über die Koppeleinrichtung 32 formschlüssig mit dem Tellerrad 22 gekoppelt ist.

Um Schaltzeiten, die zum Verstellen der Koppeleinrichtung 32 aus der Entkoppelstellung E in die Koppelstellung K beziehungsweise umgekehrt aus der Koppelstellung K in die Entkoppelstellung E erforderlich sind, besonders gering zu halten, ist vorzugsweise eine mechanische Federeinheit vorgesehen, welche beispielsweise die Verstellung der Koppeleinrichtung 32 aus der Entkoppelstellung E in die Koppelstellung K unterstützt. Hierzu ist die Federeinrichtung beispielsweise in der Entkoppelstellung E gespannt und stellt eine Federkraft bereit, welche auf die Koppeleinrichtung 32, insbesondere auf das Koppelelement 34, wirkt. Mittels der von der Federeinrichtung bereitgestellten Federkraft ist die Koppeleinrichtung 32, insbesondere das Koppelelement 34, beispielsweise aus der Entkoppelstellung E in die Koppelstellung K bewegbar beziehungsweise eine solche Bewegung der Koppeleinrichtung 32, insbesondere des Koppelelements 34, aus der Entkoppelstellung E in die Koppelstellung K wird mittels der bereitgestellten Federkraft unterstützt. Alternativ oder zusätzlich kann vorgesehen sein, dass mittels der mechanischen Federeinheit ein komplett automatisches Verstellen der Koppeleinrichtung 32, insbesondere des Koppelelements 34, beispielsweise aus der Entkoppelstellung E in die Koppelstellung K und/oder umgekehrt erfolgen kann.

## Patentansprüche

1. Differentialgetriebe (10) für ein Kraftfahrzeug, mit einem eine Außenverzahnung (24) aufweisenden Tellerrad (22), welches von einem Ritzel (18) des Kraftfahrzeugs antreibbar ist, und mit einer von dem Tellerrad (22) antreibbaren Differentialeinheit (26) zum Drehzahlausgleich zwischen über die Differentialeinheit (26) von dem Ritzel (18) antreibbaren Rädern (14, 16) des Kraftfahrzeugs, wobei die Differentialeinheit (26) ein von dem Tellerrad (22) antreibbares und eine Innenverzahnung (28) aufweisendes Hohlrad (30) aufweist, über welches die Räder (14, 16) antreibbar sind, und wobei bezogen auf einen Drehmomentfluss von dem Tellerrad (22) zu dem Hohlrad (30) zwischen dem Tellerrad (22) und dem Hohlrad (30) eine Koppeleinrichtung (32) angeordnet ist, welche zwischen wenigstens einer Koppelstellung (K), in welcher das Hohlrad (30) mit dem Tellerrad (22) gekoppelt ist, und wenigstens einer Entkoppelstellung (E), in welcher das Hohlrad (30) von dem Tellerrad (22) entkoppelt ist, verstellbar ist,
**dadurch gekennzeichnet, dass**
die Differentialeinheit (26) als Ravigneaux-Satz ausgebildet ist und das Hohlrad (30), einen mit dem Hohlrad (30) kämmenden ersten Planetenradsatz (44), einen mit dem ersten Planetenradsatz (44) kämmenden zweiten Planetenradsatz (48), ein mit dem ersten Planetenradsatz (44) kämmendes erstes Sonnenrad (52), ein mit dem zweiten Planetenradsatz (48) kämmendes zweites Sonnenrad (56), und einen Planetenträger (60) umfasst, an welchem die Planetenradsätze (44, 48) gelagert sind.

2. Differentialgetriebe (10) nach Anspruch 1,
**dadurch gekennzeichnet, dass**
das Differentialgetriebe (10) ein Gehäuse (38) umfasst, welches einen Aufnahmeraum (40) aufweist, in welchem die Differentialeinheit (26) aufgenommen ist, wobei das Tellerrad (22) auf einer dem Aufnahmeraum (40) abgewandten Außenseite (42) des Gehäuses (38) angeordnet ist.

3. Differentialgetriebe (10) nach Anspruch 2,
**dadurch gekennzeichnet, dass**
das Hohlrad (30) über das Gehäuse (38) von dem Tellerrad (22) antreibbar ist, wobei das Tellerrad (22) drehfest mit dem Gehäuse (38) verbunden und das Hohlrad (30) separat von dem Gehäuse (38) ausgebildet ist, und wobei das Hohlrad in (30) der Koppelstellung (K) mit dem Gehäuse (38) gekoppelt und in der Entkoppelstellung (E) von dem Gehäuse (38) entkoppelt ist.

4. Differentialgetriebe (10) nach Anspruch 3,
**dadurch gekennzeichnet, dass**
das Tellerrad (22) einstückig mit dem Gehäuse (38) ausgebildet ist.

5. Differentialgetriebe (10) nach Anspruch 2,
**dadurch gekennzeichnet, dass**
das Hohlrad (30) über das Gehäuse (38) von dem Tellerrad (22) antreibbar ist, wobei das Hohlrad (30) drehfest mit dem Gehäuse (38) verbunden und das Tellerrad (22) separat von dem Gehäuse (38) ausgebildet ist, und wobei das Tellerrad (22) in der Koppelstellung (K) mit dem Gehäuse (38) gekoppelt und in der Entkoppelstellung (E) von dem Gehäuse (38) entkoppelt ist.

6. Differentialgetriebe (10) nach Anspruch 5,
**dadurch gekennzeichnet, dass**
das Hohlrad (30) einstückig mit dem Gehäuse (38) ausgebildet ist.

7. Differentialgetriebe (10) nach einem der vorhergehenden Ansprüche,
**dadurch gekennzeichnet, dass**
wenigstens ein erstes der Räder (14, 16) über den Planetenträger (60) und wenigstens ein zweites der Räder (14, 16) über das zweite Sonnenrad (56) antreibbar ist.

8. Differentialgetriebe (10) nach einem der vorhergehenden Ansprüche,
**dadurch gekennzeichnet, dass**
eine Antriebseinheit (64) vorgesehen ist, mittels welcher das erste Sonnenrad (52) antreibbar ist, um eine Drehmomentverteilung auf die Räder (14, 16) zu variieren.

9. Differentialgetriebe (10) nach einem der vorhergehenden Ansprüche,
**dadurch gekennzeichnet, dass**
das Tellerrad (22) in der Koppelstellung (K) der Koppeleinrichtung (32) mittels dieser formschlüssig mit dem Hohlrad (30) gekoppelt ist.

10. Differentialgetriebe (10) nach einem der vorhergehenden Ansprüche,
**dadurch gekennzeichnet, dass**
eine Synchronisationseinrichtung zum Synchronisieren des Tellerrads (22) mit dem Hohlrad (30) bei Verstellen der Koppeleinrichtung (32) aus der Entkoppelstellung (E) in die Koppelstellung (K) vorgesehen ist.

11. Kraftfahrzeug mit wenigstens einem Differentialgetriebe (10) nach einem der vorhergehenden Ansprüche.

## Claims

1. Differential gearing (10) for a motor vehicle, having a ring gear (22) having an outer toothing (24), which ring gear is drivable by a pinion (18) of the motor vehicle and having a differential unit (26) drivable by the ring gear (22) for torque compensation between wheels (14, 16) of the motor vehicle which can be driven via the differential unit (26) by the pinion (18), wherein the differential unit (26) has an internal gear (30) which can be driven by the ring gear (22) and which has an inner toothing (28), by means of which internal gear the wheels (14, 16) are driveable, and wherein, in respect of a torque flow from the ring gear (22) to the internal gear (30), between the ring gear (22) and the internal gear (30) is arranged a coupling device (32) which is adjustable between at least one coupling position (K) in which the internal gear (30) is coupled with the ring gear (22), and at least one decoupling position (E) in which the internal gear (30) is decoupled from the ring gear (22),
**characterised in that**
the differential unit (26) is in the form of a Ravigneaux gear set and the internal gear (30) comprises one first planetary gear set (44) meshing with the internal gear (30), one second planetary gear set (48) meshing with the first planetary gear set (44), one first sun gear (52) meshing with the first planetary gear set (44), one second sun gear (56) meshing with the second planetary gear set (48), and one planetary carrier (60) on which the planetary gear sets (44, 48) are mounted.

2. Differential gearing (10) according to claim 1,
**characterised in that**
the differential gearing (10) includes a housing (38) which has a mounting frame (40) in which the differential unit (26) is mounted, wherein the ring gear (22) is arranged on an outer side (42), facing away from the mounting frame (40), of the housing (38).

3. Differential gearing (10) according to claim 2,
**characterised in that**
the internal gear (30) is drivable via the housing (38) by the ring gear (22), wherein the ring gear (22) is connected non-rotationally with the housing (38) and the internal gear (30) is constructed separately from the housing (38) and wherein the internal gear (30) in the coupling position (K) is coupled with the housing (38) and in the decoupling position (E) is decoupled from the housing (38).

4. Differential gearing (10) according to claim 3,
**characterised in that**
the ring gear (22) is designed integrally with the housing (38).

5. Differential gearing (10) according to claim 2,
**characterised in that**
the internal gear (30) is driveable via the housing (38) by the ring gear (22), wherein the internal gear (30) is connected non-rotationally with the housing (38) and the ring gear (22) is constructed separately from the housing (38), and wherein the ring gear (22) in the coupling position (K) is coupled with the housing (38) and in the decoupling position (E) is decoupled from the housing (38).

6. Differential gearing (10) according to claim 5,
**characterised in that**
the internal gear (30) is designed integrally with the housing (38).

7. Differential gearing (10) according to any of the preceding claims,
**characterised in that**
at least one first of the wheels (14, 16) is driveable via the planetary carrier (60) and at least one second of the wheels (14, 16) is driveable via the second sun gear (56).

8. Differential gearing (10) according to any of the preceding claims,
**characterised in that**
a drive unit (64) is provided by means of which the first sun wheel (52) is driveable in order to vary a torque distribution onto the wheels (14, 16).

9. Differential gearing (10) according to any of the preceding claims,
**characterised in that**
the ring gear (22) in the coupling position (K) of the coupling device (32) is coupled by means thereof in a form-fitting manner with the internal gear (30).

10. Differential gearing (10) according to any of the preceding claims,
**characterised in that**
a synchronising device is provided for synchronising the ring gear (22) with the internal gear (30) when adjusting the coupling device (32) out of the decoupling position (E) into the coupling position (K).

11. Motor vehicle having at least one differential gearing (10) according to any of the preceding claims.

## Revendications

1. Transmission différentielle (10) pour un véhicule automobile, avec une couronne de différentiel (22) présentant une denture extérieure (24), laquelle peut être entraînée par un pignon (18) du véhicule automobile, et avec une unité différentielle (26) pouvant être entraînée par la couronne de différentiel (22) pour l'équilibrage de la vitesse de rotation entre des roues (14, 16) du véhicule automobile pouvant être entraînées par le pignon (18) via l'unité différentielle (26), dans laquelle l'unité différentielle (26) présente une couronne de train planétaire (30) pouvant être entraînée par la couronne de différentiel (22) et présentant une denture intérieure (28), via laquelle les roues (14, 16) peuvent être entraînées, et dans laquelle, par rapport à un flux de couple allant de la couronne de différentiel (22) jusqu'à la couronne de train planétaire (30), un appareil d'accouplement (32) est agencé entre la couronne de différentiel (22) et la couronne de train planétaire (30), lequel peut être déplacé entre au moins une position d'accouplement (K), dans laquelle la couronne de train planétaire (30) est accouplée avec la couronne de différentiel (22), et au moins une position de désaccouplement (E), dans laquelle la couronne de train planétaire (30) est désaccouplée de la couronne de différentiel (22).
**caractérisée en ce que**
l'unité différentielle (26) est réalisée comme train d'engrenage de Ravigneaux et la couronne de train planétaire (30) comprend un premier train planétaire (44) en engrènement avec la couronne de train planétaire (30), un second train planétaire (48) en engrènement avec le premier train planétaire (44), une première roue solaire (52) en engrènement avec le premier train planétaire (44), une seconde roue solaire (56) en engrènement avec le second train planétaire (48), et un porte planétaire (60), au niveau duquel les trains de planétaires (44, 48) sont stockés.

2. Transmission différentielle (10) selon la revendication 1,
**caractérisée en ce que**
la transmission différentielle (10) comprend un boîtier (38), lequel présente un espace de logement (40) dans lequel l'unité différentielle (26) est accueillie, dans lequel la couronne de différentiel (22) est agencée sur un côté externe (42) du boîtier (38) détourné par rapport à l'espace de logement (40).

3. Transmission différentielle (10) selon la revendication 2,
**caractérisée en ce que**
la couronne de train planétaire (30) peut être entraînée par la couronne de différentiel (22) via le boîtier (38), dans lequel la couronne de différentiel (22) est reliée de manière solidaire avec le boîtier (38) et la couronne de train planétaire (30) est réalisée de manière séparée par rapport au boîtier (38), et dans lequel la couronne de train planétaire (30) est accouplée avec le boîtier (38) dans la position d'accouplement (K) et est désaccouplée du boîtier (38) dans la position de désaccouplement (E).

4. Transmission différentielle (10) selon la revendication 3,
**caractérisée en ce que**
la couronne de différentiel (22) est réalisée d'un seul tenant avec le boîtier (38).

5. Transmission différentielle (10) selon la revendication 2,
**caractérisée en ce que**
la couronne de train planétaire (30) peut être entraînée par la couronne de différentiel (22) viale boîtier (38), dans lequel la couronne de train planétaire (30) est reliée de manière solidaire avec le boîtier (38) et la couronne de différentiel (22) est réalisée de manière séparée par rapport au boîtier (38), et dans lequel la couronne de différentiel (22) est accouplée avec le boîtier (38) dans la position d'accouplement (K) et est désaccouplée du boîtier (38) dans la position de désaccouplement (E).

6. Transmission différentielle (10) selon la revendication 5,
**caractérisée en ce que**
la couronne de train planétaire (30) est réalisée d'un seul tenant avec le boîtier (38).

7. Transmission différentielle (10) selon l'une quelconque des revendications précédentes, **caractérisée en ce que**
au moins une première parmi les roues (14, 16) peut être entraînée via un porte planétaire (60) et au moins une seconde parmi les roues (14, 16) via la seconde roue solaire (56).

8. Transmission différentielle (10) selon l'une quelconque des revendications précédentes, **caractérisée en ce que**
une unité motrice (64) est prévue, au moyen de laquelle la première roue solaire (52) peut être entraînée pour faire varier une répartition du couple sur les roues (14, 16).

9. Transmission différentielle (10) selon l'une quelconque des revendications précédentes, **caractérisée en ce que**
la couronne de différentiel (22) est accouplée, dans la position d'accouplement (K) de l'appareil d'accouplement (32), au moyen de celle-ci par raccord mécanique avec la couronne de train planétaire (30).

10. Transmission différentielle (10) selon l'une quelconque des revendications précédentes, **caractérisée en ce qu'**
un appareil de synchronisation est prévu pour synchroniser la couronne de différentiel (22) avec la couronne de train planétaire (30) lors du déplacement de l'appareil d'accouplement (32) à partir de la position de désaccouplement (E) vers la position d'accouplement (K).

11. Véhicule automobile avec au moins une transmission différentielle (10) selon l'une quelconque des revendications précédentes.
